(19) Europäisches Patentamt
European Patent Office
Office européen des brevets

(11) **EP 4 414 918 A1**

(12) **EUROPEAN PATENT APPLICATION**

(43) Date of publication:
**14.08.2024 Bulletin 2024/33**

(21) Application number: **24156457.4**

(22) Date of filing: **08.02.2024**

(51) International Patent Classification (IPC):
**G06Q 10/10** (2023.01)   **G06Q 50/06** (2024.01)
**H02J 3/00** (2006.01)   **H02J 3/14** (2006.01)
**H02J 13/00** (2006.01)

(52) Cooperative Patent Classification (CPC):
**G06Q 50/06; G06Q 10/04; G06Q 30/02;**
**G06Q 30/04; H02J 3/003; H02J 3/14;**
H02J 2310/50; H02J 2310/60

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **08.02.2023 BE 202305090**

(71) Applicant: **Niko NV**
**9100 Sint-Niklaas (BE)**

(72) Inventors:
• **VERBIEST, Nele**
  **9100 Sint-Niklaas (BE)**
• **DE BOCK, Yannick**
  **9120 Beveren (BE)**
• **GOEMAERE, Geert**
  **2900 Schoten (BE)**
• **VAN REMORTEL, Bart**
  **4576 CW Koewacht (NL)**

(74) Representative: **Winger**
**Mouterij 16 bus 101**
**3190 Boortmeerbeek (BE)**

(54) **METHOD AND ENERGY MANAGEMENT SYSTEM FOR PREVENTING HIGH ENERGY USAGE PEAKS**

(57)    The present invention provides a method for preventing high energy usage peaks when using electric or electronic appliances. The method comprises defining an energy usage peak threshold ETH and household routings as recurring energy usage at the same time frames, from historical energy usage, household routines. The method further comprises continuously determining (Routine * Weight + Avg * (1-Weight)) within a time frame (TF) with a start time ($T_S$) and an end time ($T_E$) with Routine being energy consumption prediction for the current time frame (TF), Avg the average energy consumption from the start of the current time frame (TF) until the current point in time, and weight equals being the time elapsed during the current time frame. The result is compared to the energy usage peak threshold. If reached or surpassed, a first electric or electronic appliance may be switched off.

FIG. 1

## Description

## Technical field of the invention

The present invention relates to a method and an energy management system for preventing high energy usage peaks and to an energy management system.

## Background of the invention

Due to efforts to limit $CO_2$ emissions, there has been an energy transition going on during the last decades. Decentral wind and solar electricity production are slowly taking over central nuclear, gas and coal-fired electricity production. At the same time, there is an electrification of the society. That is, more and more houses, cars and appliances are relying on electricity rather than on gas or fuel.

This energy transition comes with new challenges. One of the main challenges is to better align electricity consumption and the production thereof by avoiding peaks in electricity consumption or production, as these can overload the power grid. One way to tackle this is to introduce a so-called capacity rate. Consumers will be encouraged to increase selfconsumption and to avoid peaks in their electricity usage.

In some countries, the network charges will in the future mainly be based on the peak usage of a customer. For example, for every predefined period, the electricity consumption will be calculated. Each month, the predefined period with the highest average consumption will be considered as the peak usage. The yearly network charges will then be based on the average peak usage of the last 12 months. The peak usage will be communicated to the customer and will be clearly displayed on the yearly invoice.

IN 201941001246 relates to the field of 'internet-of-things'- based energy management systems. The conventional systems failed to determine power consumed by the appliances during peak hours. The system comprises a cloud server and a fog-based analysing unit. The cloud server is configured to store a historical energy consumption data associated with a plurality of consumers in a geographical area. The fog-based analysing unit is communicatively coupled to the cloud server and a plurality of energy metering devices. The analysing unit is configured to forecast demand of energy for each of the consumers and facilitate management of energy. The forecast is thus based on historical data and is done for energy usage for each household of multiple households of an energy provider. Cost during peak times is monitored and the system makes the user aware of these costs. The user is responsible for turning on/off devices and to identify which devices play a major role in the high energy consumption during these peak times. The system of IN 201941001246 is thus used to reduce energy consumption during peak times, but it is still the user that has to do the action of turning off the devices. US 2003/0171851 relates to automatic energy management. Immediate automatic querying of devices that use energy within a system of buildings for energy curtailment possibilities is provided. Such immediate, automatic querying may be answered by the devices through artificial intelligence and/or neural network technology provided to or programmed into these devices, and the queried energy users may respond in real-time. Those real-time computerized responses with energy curtailment possibilities may be received automatically by a data processing facility, and processed in real-time. The responses from queried energy users with energy curtailment possibilities may be automatically processed into a round-robin curtailment rotation which may be implemented by a computer-based control system. Impact on occupants is minimized, and energy usage and energy cost may be beneficially reduced in an intelligent, real-time manner. US 2003/0171851 also provides for early recognition of impending adverse energy events, optimal response to a particular energy situation, real-time analysis of energy-related data, etc.

The automatic energy management in US 2003/0171851 is a planned system, i.e. round-robin curtailment, and is not a reactive system that reactively and automatically switches off devices when a certain energy usage threshold is going to be exceeded.

US 2018/0285989 describes the use of energy usage measurements to predict future consumption for each of a plurality of power usage devices. Power consumption can then be modified using that prediction. The energy cost can be optimized based using the prediction, such as, for example, by modifying a power consumption of one of the power usage devices. In US 2018/0285989 energy usage is optimized in function of utility pricing, appliance use patterns and occupancy profiles. Energy cost is optimized based at least in part on the prediction for each of the plurality of power usage devices. Optionally, an EV battery can be used to shift building load to periods with lower cost. So, energy management is not based on energy usage peaks but on energy cost. Therefore, high energy usage peaks can still occur in periods with lower energy cost.

## Summary of the invention

It is an object of embodiments of the present invention to provide a method for preventing high energy usage peaks when using electric or electronic appliances, which takes into account routines in energy usage in a household.

The above objective is accomplished by a method and an energy management system according to embodiments of the present invention.

The present invention provides a method for preventing high energy usage peaks when using electric or electronic appliances. The method comprises defining households' routines from historical energy usage, wherein households' routines are defined as recurring energy usage by particular electric or electronic appliances at same time frames during at least one day of a week, defining a predefined energy usage peak threshold, within consecutive time frames with a start time and an end time continuously determining:

$$Routine * Weight + Avg * (1\text{-}Weight)$$

wherein Routine is energy consumption prediction for the current time frame, Avg is the average energy consumption from the start of the current time frame until the current point in time and weight equals $x/(T_E\text{-}T_S) + 1$, with x being the time passed from the start of the time frame and $T_E\text{-}T_S$ being the total duration of the complete time frame. In some embodiments, the weight equals $x/(900s) +1$. From the continuous determining of Routine * Weight + Avg * (1-Weight) it is then predicted whether Routine * Weight + Avg * (1-Weight) will be equal to or higher than the predefined energy usage peak threshold ($E_{TH}$) in the subsequent time frame (TF), and when (Routine * Weight + Avg * (1-Weight)) is equal to or higher than the predefined energy usage peak threshold, a first electric or electronic appliance is switched off.

An advantage of a method according to embodiments of the invention is that it takes into account routines in energy usage of households, ... When a routine in energy usage is expected in a coming time frame, the amount of energy used during this routine will be taken into account in the determination whether (Routine * Weight + Avg * (1-Weight)) will be equal to or higher than the predefined energy usage peak threshold.

According to embodiments of the invention, the method may furthermore comprise making a priority list of electric or electronic appliances that can be switched off, wherein electric or electronic appliances that may be switched off first are at the top of the list, and wherein switching of a first electric or electronic appliance is done by switching off the first electric or electronic appliance according to the priority list.

When it is then decided that, in a same or subsequent time frame after switching off a first electric or electronic appliance, Routine * Weight + Avg * (1-Weight) will still be equal to or higher than the predefined energy usage peak threshold, the method may, according to embodiments of the invention, further comprise switching off a further electric or electronic appliance.

According to further embodiments, the method may further comprise continuously determining

$$Routine * Weight + Avg * (1\text{-}Weight) + E_{Dev}$$

wherein $E_{Dev}$ is predicted energy consumption by a switched off electric or electronic appliance, and when (Routine * Weight + Avg * (1-Weight) + $E_{Dev}$) is smaller than the predefined peak threshold, switching the electric or electronic appliance back on.

According to embodiments of the invention, defining the households' routines may be based on energy use. According to other embodiments of the invention, defining the households' routines may be based on device use.

In a second aspect, the present invention provides an energy management system for preventing high energy usage peaks when using electric or electronic appliances. The energy management system comprises a gateway for controlling the electric or electronic appliances, a means for defining, from historical energy usage, households' routines, wherein households' routines are defined as recurring energy usage occurrences at a same time frame during at least one day of a week, a digital meter for monitoring for monitoring energy usage, and a processor adapted for performing the method as described above.

**Brief description of the drawings**

It has to be noted that same reference signs in the different figures refer to same, similar or analogous elements.

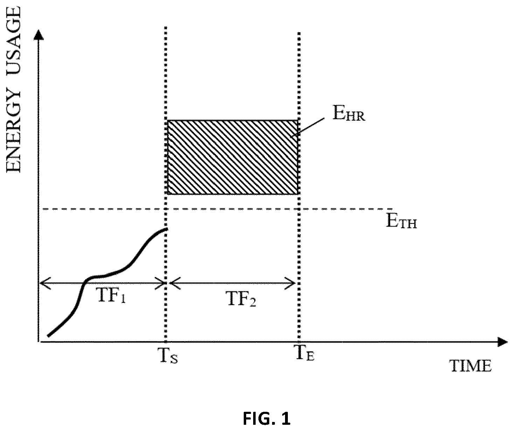

Fig. 1 schematically illustrates a method according to embodiments of the invention.

**Description of illustrative embodiments**

In the description different embodiments will be used to describe the invention. Therefore reference will be made to a drawings. It has to be understood that the drawing is intended to be non-limiting, the invention is only limited by the claims. The drawing is thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

Not all embodiments of the invention comprise all features of the invention. In the following description and claims, any of the claimed embodiments can be used in any combination. The present invention provides a method for preventing high energy usage peaks when using electric or electronic appliances. The method comprises defining households' routines from historical energy usage, wherein households' routines are defined as recurring energy usage by particular electric or electronic appliances at same time frames during at least one day of a week, defining a predefined energy usage peak threshold, within consecutive time frames with a start time and an end time continuously determining:

$$Routine * Weight + Avg * (1\text{-}Weight)$$

wherein Routine is energy consumption prediction for the current time frame, and Avg is the average energy consumption from the start of the current time frame (TF) until the current point in time. In embodiments, the average energy consumption is continuously calculated from the consumption. The weight equals $x/(T_E-T_S)+1$, where Ts is the start time of the time frame and $T_E$ is the end time of the time frame, so $T_E-T_S$ is the duration of the TF. In some embodiments, the weight equals $x/(900s) + 1$, with x being the time in seconds passed from the start of the time frame. The embodiment corresponds to a time frame of 15 minutes, since in countries such Belgium, the time frame to calculate the capacity tariff is set to that duration. From the continuous determining of Routine * Weight + Avg * (1-Weight) it is then predicted whether Routine * Weight + Avg * (1-Weight) will be equal to or higher than the predefined energy usage peak threshold $(E_{TH})$ in the subsequent time frame (TF), and when (Routine * Weight + Avg * (1-Weight)) is equal to or higher than the predefined energy usage peak threshold, a first electric or electronic appliance from the particular electric or electronic appliances is switched off.

An advantage of a method according to embodiments of the invention is that it takes into account routines in energy usage of households, ... When a routine in energy usage is expected in a coming time frame, the amount of energy used during this routine will be taken into account in the determination whether (Routine * Weight + Avg * (1-Weight)) will be equal to or higher than the predefined energy usage peak threshold. From that, electric or electronic appliances can be switched off in order to prevent the energy usage peak to become too high. The method described according to the present invention may be referred to as the peak shaving mode. The peak shaving mode is intended to help consumers to keep their energy peak usage low. This will be done by switching off devices when electricity consumption of the current predefined period of time is likely to exceed a predefined level.

A customer is asked to provide or define a threshold value for the energy peak usage and a list of devices that may be switched off to avoid the energy peak usage threshold to be exceeded. These devices may be ordered, devices at the top of the list are intended to be switched off first. Examples of such devices may be a boiler, a car charger, a heat pump, switches for chargeable devices, e.g. smartphone, vacuum cleaner, ... , electrical heating, a home battery. Thus, in the peak shaving mode, devices will be switched off when the electricity consumption of the current predefined period of time is likely to exceed a certain level. This is done by keeping track of the consumption in that predefined period of time. According to embodiments of the invention, households' routines are taken into account. With households' routines is meant the devices that are used, and thus switched on every time on a same day and a same hour and for a same amount of time. Hence, if according to the households' routine, energy usage of the next predefined period of time is expected to be high, the peak shaving mode can anticipate (and start switching off devices) much faster so as to prevent the energy peak usage to go beyond the predefined energy usage peak. Thus, Routine is the energy consumption anticipated for that time period. The Routine can be obtained automatically using a processing unit, e.g. by collecting data during days, weeks, or longer, forming historical data, and analysing said historical data, and/or by extrapolation of said historical data, and/or by direct input of a schedule by a programmer or user (for example based on the historical data).

Concretely, integrating energy usage due to households' routines in the peak shaving mode allows to disable devices faster based on expected energy usage of the households' routines, keep devices disabled for a longer time if energy usage due to households' routines for the next predefined period of time is high, (re-)enable or switch back on devices or send suggestions (also for devices that are not included in peak shaving mode) when energy usage due to households' routines is low.

The present invention will hereinafter be described by means of different embodiments. It has to be understood that these embodiments are only for the ease of understanding the invention and are not intended to limit the invention in any way.

Fig. 1 schematically illustrates a method according to embodiments of the invention. The peak shaving method according to embodiments of the invention comprises, in a first step, defining at least one households' routine from historical energy usage. Hereby, a household's routine is defined as a recurring energy usage $E_{HR}$ by a particular electric or electronic appliance, always at a same time frame on at least one day of a week. For example, every day at 6 o'clock in the evening the electric stove is switched on for cooking diner, or every Monday and every Thursday at 8 o'clock in the evening an electric car is being charged. This information can be added by a user or programmer, or automatically determined from historical data of the energy usage for that device, e.g. the processing unit may store energy usage and information related to the electric or electronic appliance, and provide a trend by data analysis, thus providing the 'Routine'.

Further, an energy usage peak threshold $E_{TH}$ needs to be defined. This energy usage peak threshold can be different for different households and can depend on different factors such as, for example, whether or not a consumer has to pay more for a higher energy peak usage or may simply be because a consumer wants to control his or her energy usage and related cost. Then, time frames TF need to be defined by a start time $T_S$ and an end time $T_E$ during which a consumer wants to monitor the energy usage for predicting energy usage in the subsequent time frame TF. For example, the predefined time frame TF may be 15 min. However, the predefined time frame can be any other time frame as deemed relevant by a consumer. The higher the time frame TF is chosen, the lower the accuracy of the method according to embodiments of the invention may be.

In a next step, Routine * Weight + Avg * (1-Weight) is continuously monitored within consecutive time frames TF, wherein Routine is energy consumption prediction. The Routine is the predicted energy usage for a given time frame. It can be calculated from the historical global data consumption for that household. In some embodiments, if data from separate devices is available, it can be calculated using a combination of the historical global data consumption of the household and data from the separate devices, so the Routine can be more accurately estimated for the relevant time frame TF. Avg is the average energy consumption from the start $T_S$ of the current time frame TF until the current point in time. Avg can be measured and monitored by usual energy measurement means, for example it can be continuously monitored by an energy meter. In some embodiments, information of the energy consumption by individual appliances can be used, mainly to improve predictions (e.g. if collecting historical data while carrying out the method of preventing peaks of the present invention).

The weight relates to the amount of time, within the current time frame TF, that has elapsed since the time frame started. Thus, the weight is calculated as $x/(T_E-T_S)$ -1 where x is the time passed since the start of the frame, and $T_E-T_S$ is the total duration of the frame. In some embodiments, the weight equals $x/(900s) + 1$, with x being the time passed from the start Ts of the time frame TF. If the frame was differently defined (e.g. as 30 minutes), then the weight would be $x/(1800s)$ -1. From the continuous determining of Routine * Weight + Avg * (1-Weight) it is then predicted whether Routine * Weight + Avg * (1-Weight) will be equal to or higher than the predefined energy usage peak threshold ($E_{TH}$) in the subsequent time frame TF, and when it is predicted that Routine * Weight + Avg * (1-Weight) will be equal to or higher than the predefined energy usage peak threshold $E_{TH}$ in the subsequent time frame TF, a first electric or electronic appliance is switched off. In other words, if the predicted energy consumption during the remainder of the time frame, combined with the measured energy consumption in the time passed from the start Ts, surpasses the predefined energy usage peak threshold $E_{TH}$, the method comprises switching off a first electric or electronic appliance. After switching off the first electric or electronic appliance, Routine * Weight + Avg * (1-Weight) is further monitored. When it then seems that Routine * Weight + Avg * (1-Weight) is still equal to or higher than the predefined energy usage peak threshold $E_{TH}$, a second electric or electronic appliance maybe switched off. In some embodiments, the sequence of turning off is applied independently of monitoring the individual appliances. If for instance a signal is sent to turn a device off, but the consumption is still high, the following device in the list will be turned off. In some embodiments, there is no need to track which device is on or off since. If the signal to turn off a device is sent but the device was not on, then there will be no change, and the next device in the list will be turned off. This simplifies the setup and processing, and no additional hardware is required to track powering of each appliance.

And so, monitoring Routine * Weight + Avg * (1-Weight) continuously goes on, and electric or electronic appliances keep being switched off as long as Routine * Weight + Avg * (1-Weight) is equal to or higher than the predefined energy usage peak threshold $E_{TH}$.

In some embodiments, the sequence of appliances to be switched off can be programmed or defined by a user taking into account a hierarchical or priority order, where the least critical appliance can be switched off first, see below.

In the example given in Fig. 1, energy usage is shown as a function of time. As can be seen, energy usage is increasing in a first time frame $TF_1$, but is still below the energy usage peak threshold $E_{TH}$. According to the method according to embodiments of the invention, Routine * Weight + Avg * (1-Weight) is continuously monitored. In the subsequent time frame $TF_2$, a household's routine will occur. This is taken into account by Routine * Weight + Avg * (1-Weight). Hence, it will be predicted that the energy usage will exceed the energy usage peak threshold $E_{TH}$ in the subsequent time frame $TF_2$ and because of that at least one of electric or electronic appliances that is switched on at that moment will be switched off. If this household's routine would not have been taken into account, no precautions would have been taken by switching of at least one electric or electronic appliance and the energy usage would have shown a very high energy usage peak, which could lead to very high costs.

It is an advantage that the peak usage can be defined by a user or automatically based on information from the energy provider, and its value ($E_{TH}$) can be directly introduced to the method (or e.g. on an energy management system). This allows to provide energy peak shaving effectively and easily with no need to provide any further calculation, thus saving time and/or processing power.

According to embodiments of the invention, a priority list of electric or electronic appliances that can be switched off may be made. In that priority list, a user can indicate which electric or electronic appliances may be switched off first. These electric or electronic appliances are then at the top of the list. Switching of a first electric or electronic appliance may then be done by switching off the first electric or electronic appliance on the priority list. In that way, comfort for the user can be enhanced because he or she can more or less determine which electric or electronic appliances are switched off first.

At one point in time, peaks will be reduced, and electric or electronic appliances can be switched back on. According to embodiments of the invention, this may be done by, next to monitoring Routine * Weight + Avg * (1-Weight), also continuously monitoring:

$$\text{Routine} * \text{Weight} + \text{Avg} * (1\text{-Weight}) + E_{Dev}$$

wherein $E_{Dev}$ is predicted energy consumption by a switched off electric or electronic appliance which has to be switched on again. $E_{Dev}$ can be determined from e.g. data of the consumption of that electric or electronic appliance, or from historical data of the global consumption data in combination with switching info about that device. When the monitored Routine * Weight + Avg * (1-Weight) + $E_{Dev}$ becomes smaller than the predefined peak threshold ($E_{TH}$), a first electric or electronic appliance may be switching back on. Again, a user can determine which electric or electronic appliance will be first switched back on. Most preferably, this will be the opposite list of appliances that the priority list of electric or electronic appliances to be switched off. In that case, the lowest electric or electronic appliance on the priority list for switching off electric or electronic appliances, may be switched back on first.

According to embodiments of the invention, two types of household's routines can be defined, i.e. routines in energy use and routines in device use. One or both can be used in the peak shaving method according to embodiments of the invention and as described above.

A first type of household's routine may be defined based on energy use. To determine the energy usage of such household's routines, according to one embodiment of the invention, average energy usages can be calculated based on patterns of the household's routines. With patterns is meant a sequence of recurrences of household's routines. Such patterns may be taken over all days, per weekday or per weekend. For example, for all household's routines that are to be taken into account, it is determined when they occur and what their energy usage is. Therefrom, average patterns are determined in energy usage and occurrence over days. The average patterns can be determined for all days, or there can be distinguished between week-days and weekends.

According to other embodiments of the invention, clustering may be used to define household's routines based on energy use. According to such embodiments, similar days, i.e. days on which occur the same household's routines can be clustered and for these clusters calculate centroids. Centroids, used as the prediction or routine, is the average value of the energy usage of the household.

According to further embodiments, household's routines may be defined based on device use. In such embodiments, the idea is to shift usage of particular electric or electronic appliances over the day based on the occurrence of household's routines. An advantage of this is that less appliances will need to be switched off during the day. This is implemented based on the priority list, wherein said particular electric or electronic appliances are shifted on the list, based on the routines.

According to embodiments of the invention, the household's routines may be continuously updated. In that way, changes in household's routines are also taken into account. This can be advantageously to keep the method according to embodiments of the invention as accurate as possible.

## Claims

1. A method for preventing high energy usage peaks when using electric or electronic appliances, the method comprising:

   - defining households' routines from historical energy usage, wherein households' routines are defined as recurring energy usage occurrences at a same time frame during at least one day of a week, thus defining a Routine being energy consumption prediction for a corresponding time frame (TF),
   - defining a predefined energy usage peak threshold ($E_{TH}$),
   - within consecutive time frames (TF) with a start time ($T_S$) and an end time ($T_E$) measuring the average energy consumption of the household and continuously determining

   $$Routine * Weight + Avg * (1\text{-}Weight)$$

   wherein Avg is the average energy consumption from the start of the current time frame (TF) until the current point in time and weight equals $x/(T_E\text{-}T_S) + 1$, with x being the time passed from the start of the time frame (TF), and $T_E\text{-}T_S$ being the total duration of the time frame (TF)
   - from the continuous determining of Routine * Weight + Avg * (1-Weight) predict whether Routine * Weight + Avg * (1-Weight) will be equal to or higher than the predefined energy usage peak threshold ($E_{TH}$) in a subsequent time frame (TF), and
   - when (Routine * Weight + Avg * (1-Weight)) is predicted to be equal to or higher than the predefined energy usage peak threshold ($E_{TH}$) in the subsequent time frame (TF), switching off a first electric or electronic appliance.

2. The method according to claim 1, wherein the method further comprises making a priority list of electric or electronic appliances that can be switched off, wherein electric or electronic appliances that may be switched off first are at the top of the list, and wherein switching of a first electric or electronic appliance is done by switching off the first electric or electronic appliance on the priority list.

3. The method according to claim 1 or 2, further comprising, when it is decided that, in a same or subsequent time frame (TF) after switching off a first electric or electronic appliance, Routine * Weight + Avg * (1-Weight) will still be equal to or higher than the predefined energy usage peak threshold ($E_{TH}$), switching off a further electric or electronic appliance.

4. The method according to any of the previous claims, further comprising:

    - continuously determining

$$\text{Routine} * \text{Weight} + \text{Avg} * (1\text{-Weight}) + E_{Dev}$$

    wherein $E_{Dev}$ is predicted energy consumption by a switched off electric or electronic appliance, and
    - when (Routine * Weight + Avg * (1-Weight) + $E_{Dev}$)) is smaller than the predefined peak threshold ($E_{TH}$), switching back on a first electric or electronic appliance.

5. The method according to claim 4 when dependent on claim 2, wherein switching back on a first electric or electronic appliance may comprise switching on an electric or electronic device that is the lowest activated electric or electronic device on the priority list.

6. The method according to any of the previous claims, wherein the households' routines are defined based on energy use.

7. The method according to any of claims 1 to 5, wherein the households' routines are defined based on device use.

8. The method according to any of the previous claims, further comprising continuously updating the household's routines.

9. An energy management system for preventing high energy usage peaks when using electric or electronic appliances, the energy management system comprising:

    - a gateway for controlling the electric or electronic appliances,
    - a means for defining, from historical energy usage, households' routines, wherein households' routines are defined as recurring energy usage occurrences at a same time frame during at least one day of a week,
    - a digital meter for monitoring energy usage, and
    - a processor adapted for performing the method according to claim 1 to 8.

**FIG. 1**

Europäisches
Patentamt

European
Patent Office

Office européen
des brevets

# EUROPEAN SEARCH REPORT

Application Number

EP 24 15 6457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/004872 A1 (OH JUNG HWAN [KR] ET AL) 5 January 2012 (2012-01-05)<br>* paragraph [0003] – paragraph [0003] *<br>* paragraph [0017] – paragraph [0017] *<br>* paragraph [0045] – paragraph [0045] *<br>* paragraph [0055] – paragraph [0055] *<br>* paragraph [0081] – paragraph [0081] *<br>* paragraph [0087] – paragraph [0088] *<br>* paragraph [0097] – paragraph [0100] *<br>* paragraph [0108] – paragraph [0113] *<br>* paragraph [0126] – paragraph [0126] *<br>* paragraph [0131] – paragraph [0133] *<br>* paragraph [0140] – paragraph [0140] *<br>* paragraph [0152] – paragraph [0152] *<br>* paragraph [0169] – paragraph [0169] *<br>* paragraph [0188] – paragraph [0188] *<br>* paragraph [0196] – paragraph [0197] *<br>* figures 1, 10, 11, 16 *<br>----- | 1-9 | INV.<br>G06Q10/10<br>G06Q50/06<br>H02J3/00<br>H02J3/14<br>H02J13/00 |
| X | US 2017/186107 A1 (GOLDEN BRIAN [US] ET AL) 29 June 2017 (2017-06-29)<br>* paragraph [0006] – paragraph [0009] *<br>* paragraph [0017] – paragraph [0019] *<br>* paragraph [0024] – paragraph [0025] *<br>* paragraph [0029] – paragraph [0029] *<br>* paragraph [0033] – paragraph [0033] *<br>* paragraph [0037] – paragraph [0057] *<br>* paragraph [0063] – paragraph [0063] *<br>* figures 1,6 *<br>----- | 1-9 | TECHNICAL FIELDS SEARCHED (IPC)<br><br>G06Q<br>H02J |
| X | WO 2016/144225 A1 (ERICSSON TELEFON AB L M [SE]) 15 September 2016 (2016-09-15)<br>* paragraph [0035] – paragraph [0036] *<br>* paragraph [0055] – paragraph [0059] *<br>* paragraph [0063] – paragraph [0064] *<br>----- | 1-9 | |

The present search report has been drawn up for all claims

| Place of search | Date of completion of the search | Examiner |
|---|---|---|
| Munich | 20 February 2024 | Melis, Caterina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 6457

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2024

| Patent document cited in search report | | Publication date | Patent family member(s) | | Publication date |
|---|---|---|---|---|---|
| US 2012004872 | A1 | 05-01-2012 | CN | 102313839 A | 11-01-2012 |
| | | | JP | 5271387 B2 | 21-08-2013 |
| | | | JP | 2012016272 A | 19-01-2012 |
| | | | KR | 101079929 B1 | 04-11-2011 |
| | | | US | 2012004872 A1 | 05-01-2012 |
| US 2017186107 | A1 | 29-06-2017 | AU | 2006339983 A1 | 20-09-2007 |
| | | | CA | 2647411 A1 | 20-09-2007 |
| | | | EP | 1994416 A2 | 26-11-2008 |
| | | | US | 2007203860 A1 | 30-08-2007 |
| | | | US | 2017186107 A1 | 29-06-2017 |
| | | | US | 2020034939 A1 | 30-01-2020 |
| | | | WO | 2007106162 A2 | 20-09-2007 |
| WO 2016144225 | A1 | 15-09-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201941001246
- US 20030171851 A
- US 20180285989 A